Europäisches Patentamt

European Patent Office

Office européen des brevets

(19)

(11) Publication number: **0 431 716 A2**

## (12) EUROPEAN PATENT APPLICATION

(21) Application number: **90250300.2**

(22) Date of filing: **30.11.90**

(51) Int. Cl.5: **G02F 1/1347, H04N 9/31**

(30) Priority: **05.12.89 IL 92555**

(43) Date of publication of application:
**12.06.91 Bulletin 91/24**

(84) Designated Contracting States:
**DE FR GB IT**

(71) Applicant: **Stalow, Michael**
**25, Hapoel Street NOF-YAM**
**Herzeliya 46105(IL)**

Applicant: **Stolov, Adi**
**25, Hapoel Street NOF-YAM**
**Herzeliya 46105(IL)**

Applicant: **Stalow, Sara**
**25, Hapoel Street NOF-YAM**
**Herzeliya 46105(IL)**

(72) Inventor: **Stalow, Michael**
**25, Hapoel Street NOF-YAM**
**Herzeliya 46105(IL)**
Inventor: **Stolov, Adi**
**25, Hapoel Street NOF-YAM**
**Herzeliya 46105(IL)**
Inventor: **Stalow, Sara**
**25, Hapoel Street NOF-YAM**
**Herzeliya 46105(IL)**

(74) Representative: **Maikowski, Michael, Dipl.-Ing.**
**Dr. et al**
**Patentanwälte Maikowski & Ninnemann**
**Xantener Strasse 10**
**W-1000 Berlin 15(DE)**

(54) **A multilayer liquid crystal device, which is free from parallax effect.**

(57) The purpose of the present invention is to offer a multi-play liquid crystal device for black and white and multicolor applications, which is set free from any parallax effect, having a very width view angle at least as in a cathode-ray tube. The problem of parallax was solved by a new concept termed STL, which is the root of the invention.

Due to the STL concept, a new system was found out termed STAL, which allow to obtain high resolution liquid crystal devices without the use of the unreasonable expensive active matrix technology. It is achieved by means of simultane energizing different electrode lattices on independent liquid crystal displays, which are juxtaposed afterwards on a common light scattering surface or a common large screen.

# A MULTILAYER LIQUID CRYSTAL DEVICE, WHICH IS FREE FROM PARALLAX EFFECT

Multilayer liquid crystal displays can rival or surpass good-quality cathode ray tubes, however they are suffering from a parallax effect, which restricts them to use in direct view applications. The parallax effect causes also unacceptable distortions in high resolution projection applications.

The present invention solves finally the problem of parallax for direct view applications, by means of backlighting the device by thoroughgoing light, which is scattered after passing the the liquid device. The absence of parallax allowed to energize simultaneously two-play or three-play liquid crystal devices and obtain high definition liquid crystal devices without the use of very expensive active matrix. The absence of parallax allowed to develop two new color systems: the eliminative color system and the eliminative/additive color mixture system, by means of which, multicolor or full color liquid crystal devices can be obtained without the use of the precise and the expensive RGB color filter.

The present invention solves also the problem of distortions in high resolution projection applications by means of a correction of the form of the electrode lattices of the composite liquid cyrstal displays.

## BACKGROUND OF THE INVENTION

The present invention is a multi-play liquid crystal device, which is a result of an enhanced search after the US Pat. application 07/236,239. Multiplay liquid crystal displays with LCDs positioned in series, was described in the US Pat 4,222,647, in the US Pat. 4,294,524 and US Pat. 4,580,876.

In the US Pat. 4,231,639 is described a double LCD, having two outer polarizers only. The absence of a polarizer in the middle, between the two LCDs causes that the device works only when only one of the LCDs is energized. When both LCDs are energized the device does not work quite.

In the US Pat. 4,547,043, is described a double LCD, having an internal polarizer between the two LCDs only. This device can work in dynamic scattering or GH-cels only. In displays, which are working on the principle of twisting the plain of polarized light, this device does not work quite. The US Pat. application 07/236,239, describes a double (or multi-play) LCD, having one or better two internal polarizers and two outer polarizers. This display demonstrates a very high contrast. The US Pat. 4,025,164 discloses a method to change the color of a single LCD using color filters in form of polarizers with transfused colors.

In the US Pat. application 07/236,239, was made use of such color filters to obtain a multicolor liquid crystal device.

All the above described patents of multilayer devices are suffering from parallax effect, which restrict them to use in direct view applications and causes unacceptable distortions in high resolution projection devices, even in a parallel projection device as described in the US Pat. 4,368,963.

## BRIEF DESCRIPTION OF THE DRAWINGS

Fig. 1
shows a cross section of a two-play device with a RGB filter, which is working according to the STL principle described in the present specification.

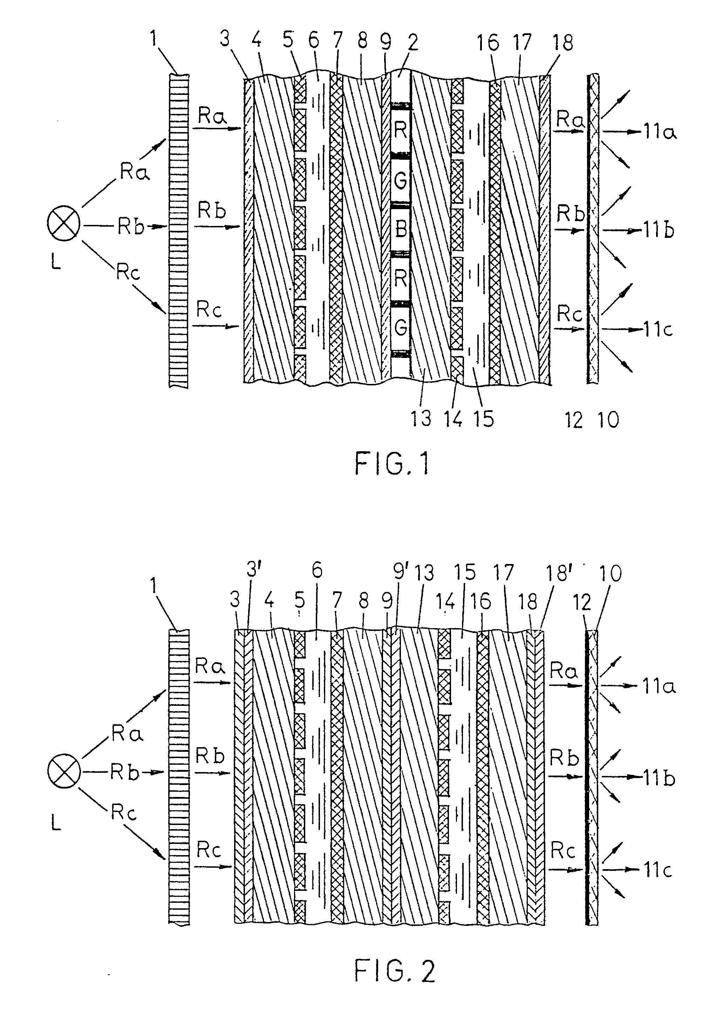

Fig. 2
is the same as in Fig. 1, but without a colored RGB filter.

Fig. 3-A and 3-B
are showing a flat backlighting device, which can be used optional.

Fig. 4
shows a high definition device working according to the STAL principle.

Fig. 5
shows a device with enhanced resolution, working according to the STAL principle.

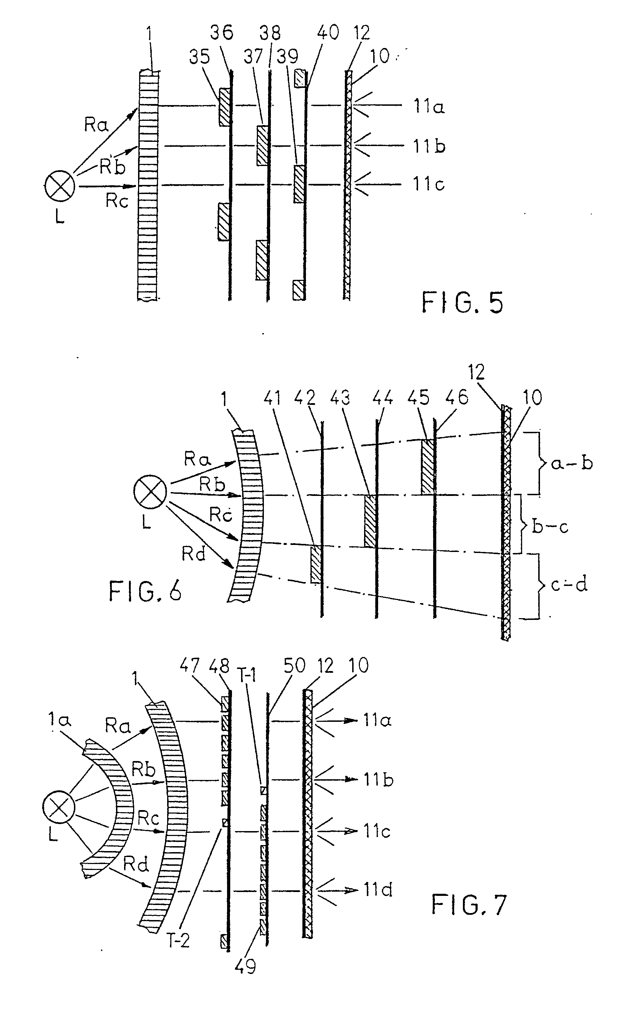

Fig. 6
shows an arrangement as in Fig. 5, but adapted for assembling with other devices.

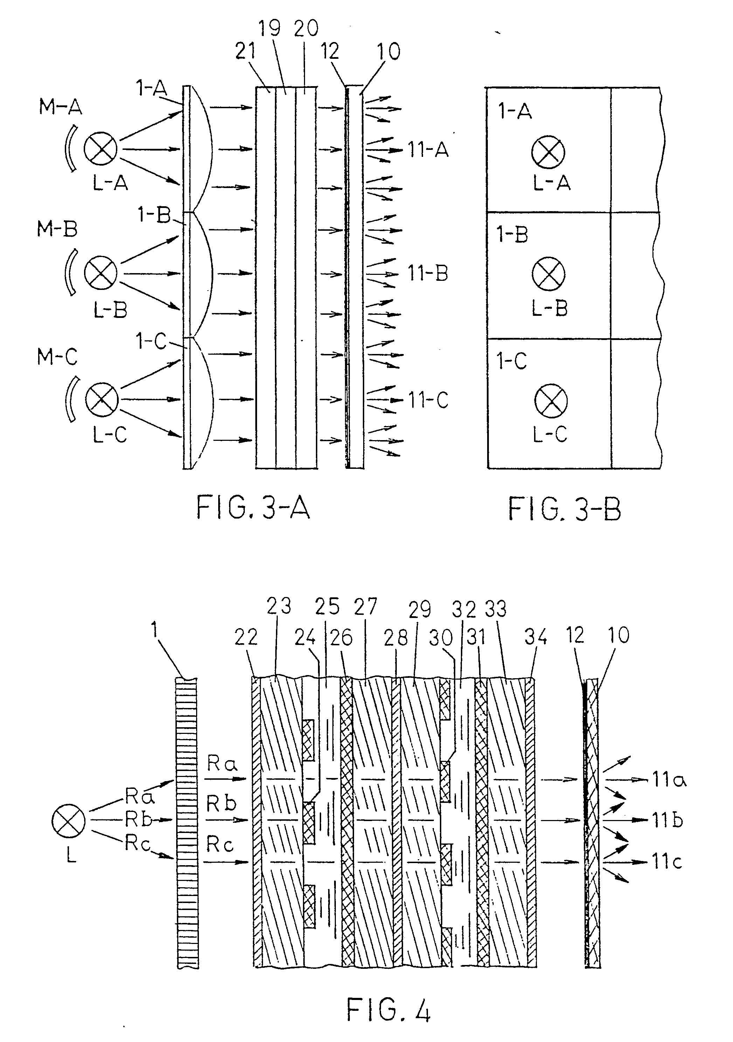

Fig. 7
shows a device as in Fig. 4, but with grouped row electrodes.

Fig. 8

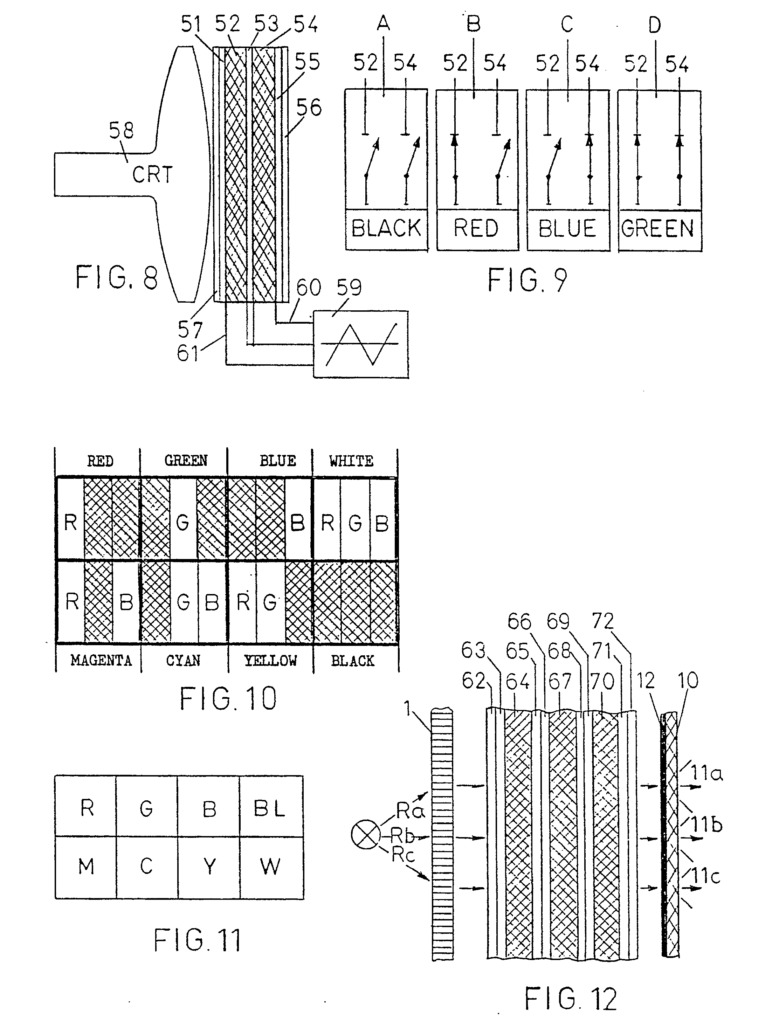

and Fig. 9 are used to explain a new eliminative color system for LCDs.

Fig. 10
is used to explain the new eliminative/additive color mixture system.

Fig. 11
is used to illustrate the colors obtained in a three-play device as in Fig. 12.

Fig. 14
shows the device of Fig. 6, carried out in a low cost way.

Fig. 15
shows a projection device according to STL princip.

Fig. 16 and Fig. 16-A
shows a projecting device to project on a prominent curved screen.

Fig. 17 and 17-A
shows a projecting device to project an a concave curved screen.

Fig. 18, 18a, 18b, 18c
are used to explain how to avoid parallax distortions in a multi-play parallel projection device.

Fig. 19
shows a projection arrangement with composite LCDs of different sizes.

Fig. 20
shows a projection arrangement with a RGB color filter in a separate layer.

Fig. 20-A and 20-B
are used to explain how the pixels and the RGB elements of the color filter are expanded during the manufacturing and how the image is compressed back to its normal proportion during the projection.

## DETAILED DESCRIPTION OF THE INVENTION

According to the present invention, a new optical system is here disclosed, which allow to obtain a number of different useful LCD devices, which does not suffer from any parallax. Moreover the system increase the view angle of any LCD to an angle of nearly 180°, in all directions, means in horizontal, as well in vertical direction.

Up to date was adopted and established an obvious principle of backlighting LCD's, by means of diffused light. However, this method causes rather small view angles in any LCD's and moreover it causes parallax in multilayer LCD's.

In spite to the obvious known principle, in this invention the LCD is backlighted by thoroughgoing light and scattered after the light passes the LCD.

As this method will be used in all embodiments, to avoid repeated descriptions - further will be used for this concept the term " STL " - short of the words: " scattering of thoroughgoing light ".

In Fig. 1 is showed a RGB color filter 2 and two LCDs disposed in different planes. The two LCDs are comprising: row electrodes 5, 14 and column electrodes 7 and 16. Members 6 and 15 are liquid crystal layers. 4, 8 and 13, 17 are the glass substrates. 3, 9 and 18 are polarizers.

Such color LCD would show an unacceptable parallax between the LCD matrixs and RGB color filter when the device would be viewed from an oblique direction. For this reason, the RGB color filter is manufactured today inside the LCD. But this process is complex and naturally adds unreasonable costs. According to STL concept the RGB color filter can be disposed outside the LCD as it is shown in Fig. 1, member 2, nevertheless any parallax is here absolutely impossible. Moreover the view angle of this device is nearly 180° in all directions. The device comprises besides the LCDs, a light source L, a lens 1, which size is at least equal to the size of the image on the LCD and a transparent plate 10, having one surface made light scattering 12.

The light source is placed at the focal distance from the lens 1, which can be a thick lens or a thin Fresnel lens. As the light source is placed in the focal point of the lens 1, all rays, which are passing the lens, eg. Ra, Rb, Rc, become aligned parallel each other and all perpendicular to the surfaces of the layer 2 of the RGB color filter and the transparent electrodes 5, 7, 14, 16 of both LCDs.

Now, none of the rays can pass the LCDs and the color filter from an oblique direction. All light rays are passing the whole device in the normal direction to the display, creating a sharp colored image on the scattering surface 12 with exellent coincidence between the pixels of the LCDs and the elements of the RGB color filter. Now the scattering surface 12, radiates the light of the created image in all directions equally, 11a, 11b, 11c. Practically, the image can be viewed in a cone of nearly to 180° from all directions, without any visible change in color or contrast. As the RGB filters are outside the LCD, stable and good saturated colors can be obtained in a simple manufacturing process.

Thus a parallax does not occurs in such device, the RGB color filter can be disposed on any surface of the device.

The electronically controlled birefringence mode (ECB) LCDs with homeotropic alignment has shown high contrast, gray scale and video response. However up to date the ECB displays has suffered from a narrow viewing angle, which restrict its to use in direct view applications. Thus the STL-system, according to the present invention garantee a view angle nearly of 180°, the ECB material may offer an good alternative to active matrix LCDs. From the other hand, the manufacturing of ECB LCDs requires high processing temperatures, which destroy any color filter material, while produced inside the LCDs. According to STL, the RGB color filter can he applied outside the LCD and after the high temperature processing, what solves also this problem.

In Fig. 2 is shown a device according to the US patent application No. 07/236,293. The device is assembled from two LCDs, having at least three polarizers means. One polarizer 9 is sandwiched in the middle between the two LCDs. Two other polarizers 3 and 18 are applied to the outer surfaces of the LCDs. Members 4, 8, 13 and 17 are glass substrates, 5 and 14 are the row electrodes, 7 and 16 are the column electrodes, 6 and 15 are the liquid crystal layers.

Such a display packet, demonstrates a very high contrast, if both LCDs are energized. It can also double the grey scale palette by energizing one or both LCDs. However this arrangement suffers from parallax, wich restrict its to use in direct view applications.

Using the STL backlighting system, which guarantees an absolute absence of any parallax, this LCD package become just very useful. It was found out that the contrast can he additionally enhanced if a second polarizer 3', 9', and 18' will be inserted (especially the internal polarizer 9, enhances the contrast). For portable devices, the holder of the light source can be made in form of a folding mechanizm.

Another idea to achieve a flat device is shown in Fig. 3-A and 3-B. The device comprises the LCDs 19, 20 and 21, member 12 is the scattering surface. L-A, L-B and L-C, are small light sources, members 1-A, 1-B and 1-C are short focal lenses, assembled in one common array. It is possible to use thick lenses or thin Fresnel lenses. Using a diffused light source, an array of microlenses, or a packet of micro-louvers or a packet of surface polished fiber optics can be used. M-A, M-S and M-C are optional mirrors.

In Fig. 4 is shown a multilayer LCD comprising two liquid crystal layers 25 and 32. Members 23, 27, 29, and 33 are glass plates. 22, 28 and 34 are polarizers. 24 and 30 are row electrodes, 26 and 31 are the column electrodes. It is shown here, that the electrode rows are separated by gaps, which width is equal to the width of the row electrodes. It is also shown that the row electrodes 24 of the first LCD are shifted against the electrode rows 30 in the second LCD. Hence, the row electrodes 24 in the first LCD are coinciding with the gaps between the electrode-rows in the second LCD. According to STL concept, the rays Ra and Rb, after passing the alignment lens 1, are parallel each other, so the images of the rows 24 and 30 apears on the scattering surface 12, juxtaposed and can be viewed from any direction without any parallax. Thus the row electrodes 24 are disposed in an other LCD than the row electrodes 30, the rows 24 and 30 of both LCDs can be energized simultaneously not disturbing each other.

For example, if one LCD have 480 rows by 4 frames per second, a double LCD according to this concept will result on the surface 12, a high definition image with 960 rows by 4 frames per second. In another example, using four LCDs build in a packet with this concept, if each LCD will have 64 rows, by 20 frames per second, the resulting image on the surface 12 will show 256 rows by 20 frames per second. In this way, video-speed images can be obtained with sufficient resolution, without using the expensive method of active matrix.

It is clear that a RGB color filter, as in Fig. 1, can be applied to any surface of the LCDs packet of Fig. 4, resulting in a multicolor or full-color image on the surface 12, with excellent coincidence between image elements and RGB color filter elements. Clear that this concept does not exclude the use of active matrix.

To avoid repeated descriptions, further will be applied for the above method, the term: " STAL " short of the words: simultane two-play assigned lattices. Here two LCD lattices (at least) while each of them maintains its separate identity, come into conjunction creating a new unknown superior quality device. The line of STAL, that enables to connect and separate these different layers, is the concept of STL.

In Fig. 5, is shown schematically a STAL display, which comprises three liquid crystal layers 36, 38 and 40 with the corresponding electrode rows 35, 37 and 39. The gap width between the rows in each LCD is twice as the electrode width. In each next LCD the row electrodes are shifted at an electrode-row width. The three LCDs create together a three-play " STAL " device. Thus the row-electrodes can be energized in each LCD independent and simultaneously, the resolution on the surface 12 will be three times higher compared with a single LCD.

In Fig. 6 is shown a similar arrangement as in Fig. 5, but the light source L is disposed at a shorter distance than the focal lenght of the lens 1. In this case, the rays eg. Ra, Rb, Rc, are not more parallel after passing the lens 1, but they diverge at a small but tough angle each other. Now, if the panel 10, is moved away at a small distance from the LCD (as shown in Fig. 6 ), the image on the scattering surface 12 will appear somewhat enlarged. The distance between the light source L and the lens 1, as well the distance between the LCD and plate 10 can be calculated so, that the enlarged image on the surface 12 will be slightly larger than the LCD together with the electrical connection wires.

This method allows to join many LCD panels. For example, the plate 10 can be joined to the plate 10' of another such LCDs, creating together a large high defintion screen without any visible grating. The plates 10, 10' can be made in form of one large common plate. In Fig. 6 is shown that a pixel on the LCD 46, should be slightly greater than the pixel on the LCD 44. As a rule for LCDs as in Fig. 6, for good coincidence between elements in different layers, the size of the elements should grown from layer to layer according to the cone between the rays. The sizes of the elements in different layers can be calculated exactly mathematically.

In Fig. 6 are shown schematically three liquid crystal layers 42, 44 and 46. Members 41, 43 and 45 are the corressponding row electrodes. The image a-b on the surface 12 is obtained from row electrode 45, the image b-c is obtained from the electrode 43 and the image c-d is obtained from the electrode 41.

In Fig. 7, is shown a STAL display, where a group of rows 49, in the second display is shifted against a group of rows 47 in the first display. The result is here the same as in Fig. 4, however the etching process is easier in devices made according to Fig. 4, or to Fig. 5.

In Fig. 7 is also shown an optional row of semiconductors like TFT - member T-1 and T-2. Such one row of transistors or diodes can drive a whole group of electrode rows, creating a low cost active matrix system.

In a double STAL supertwisted LCD, the areas in the LCDs where electrode rows are absent, can be used for color compensation. In this case the twist angles in both LCDs should be in opposite directions.

As described in the US pat. application No. 07/236,293, a multicolor LCDs can be obtained using color filters, for example the well known polarizers with transfused colors. It can work according to the well known subtractive color mixture system, wherein every primary color (red, green, blue) is obtained in result of substraction of two complementary colors (magenta, cyan, yellow). However, it was found that this system, used in LCDs is expensive, because it is necessary to assemble three LCDs in series to achieve the three primary colors: red, green and blue.

According to the present invention, a new system was found out, wherein all three primary colors can he obtained by the LCDs only. The principle of the system is explained in Fig. 8 and Fig. 9. In Fig. 8, members 52 and 54 are liquid crystal displays, 53 is a neutral polarizer, 51 is a polarizer of the color blue, 55 is a polarizer of the red color. Unlike the substractive method are the polarizers here, just of the primary colors: red and blue. In Fig. 9 is explained how it works. Assume that the planes of polarisation of all polarizers are the same. In the rectangle A, is shown the first position, wherein both LCDs are eliminated to receive voltages from the voltage source 59.

In this case both LCDs are rotating the planes of polarisation against all polarizers by $90^\circ$ (in a supertwisted LCD - according to the twist angle). In this state, no light can pass the double liquid crystal device. In the second position, rectangle, one liquid crystal display 52 is energized and the second LCD 54 is eliminated. In this state the device displays a red color. In the third position, rectangle C, the second LCD 54 is energized while the first LCD 52 is eliminated. In this state the device displays a blue color. In the fourth position D both LCDs are energized and they bring back the plain of the polarized light to $0^\circ$. In this state the light passes the double device free and a white light is displayed. Now a yellow polarizer 57 and a cyan filter 56 is added, which are oriented at $90^\circ$

to the internal neutral polarizer 53. In this case in state D a green color is displayed.

In all other states A, B and C, the polarizers 57 and 56 are eliminated, because at least one of the LCDs have rotated the light of polarisation at $90^\circ$. Thus the color yellow minus the color cyan is equal to green, the two polarizers 56 and 57 can be replaced by one polarizer of the green color at $90^\circ$ to the internal polarizer 53.

In this way a device comprising two LCDs only, can display all three primary colors, what can have many useful applications.

For example it was found out that a simple TN LCD can be switched at an enhanced speed, if it is energized by voltages of triangle form instead of the rectangle form.

As it is shown in Fig. 8, a such device as described above is used as a full-color filter in front of a black and white cathode-ray tube (CRT) 58.

In another example, was found out, that a simple TN LCD change the light transparecy almost proportional to the amplitude, if energized by triangular voltage. So the above device can be analog-modulated for grey-scale in video devices.

On the basis of the new developed "eliminative color system" was found out a new "eliminative/additive color mixture system", which allow to use the additive color mixture system, without using an very expensive RGB color filter, by means of two LCDs only. Fig. 10 shows how to do it. Every pixel is devided in three parts. Every third part can be energized independent. As every part, depending on the on/off state in both LCDs can be red or green or blue or black, the whole pixel can obtain every desired color, depending on the combination of the three parts.

In this way a true RGB full-color liquid crystal device can be obtained by software only, and there is not necessary to manufacture a precise RGB color filter.

Dividing the whole pixel in two parts only, seven colors can be obtained, what is sufficient for many applications. Adding grey scale to the color palette, the number of colors can be multiplied. Here the partial pixels are colored in the eliminative color system, while the color of the whole pixel is obtained by the additive color mixture system. The partial pixels can also be colored in the old substractive color mixture system, then the new system will be termed as: "substractive/additive color system". The new terms will be: E/A color system and S/A color system.

In Fig. 12, is shown a device comprising three LCDs 64, 67 and 70. Members 62, 63 are color polarizers of the color blue, 65, 66 are colored polarizers of the color green, 68, and optional 69 are neutral polarizers, 71, 72 are polarizers of the red color. Using supertwisted LCDs of green color, the green polarizer should replaced by a neutral polarizer. Likewise, in supertwisted LCDs of blue color, the blue polarizer should be replaced by a neutral polarizer.

As in this device are used the primary colors: red, green and blue, it works according to the new eliminative color system, nevertheless it can also work according to the known substractive color mixture system, using the colors: magenta, cyan and yellow. Using the STL system was obtained all basic colors: red, green blue, magenta, cyan, yellow, black and white, with excellent coincidence between the pixels of all three LCDs, as in Fig. 11. This method is expensive, but it delivers more brightness per watt of the light source and delivers also more resolution per space.

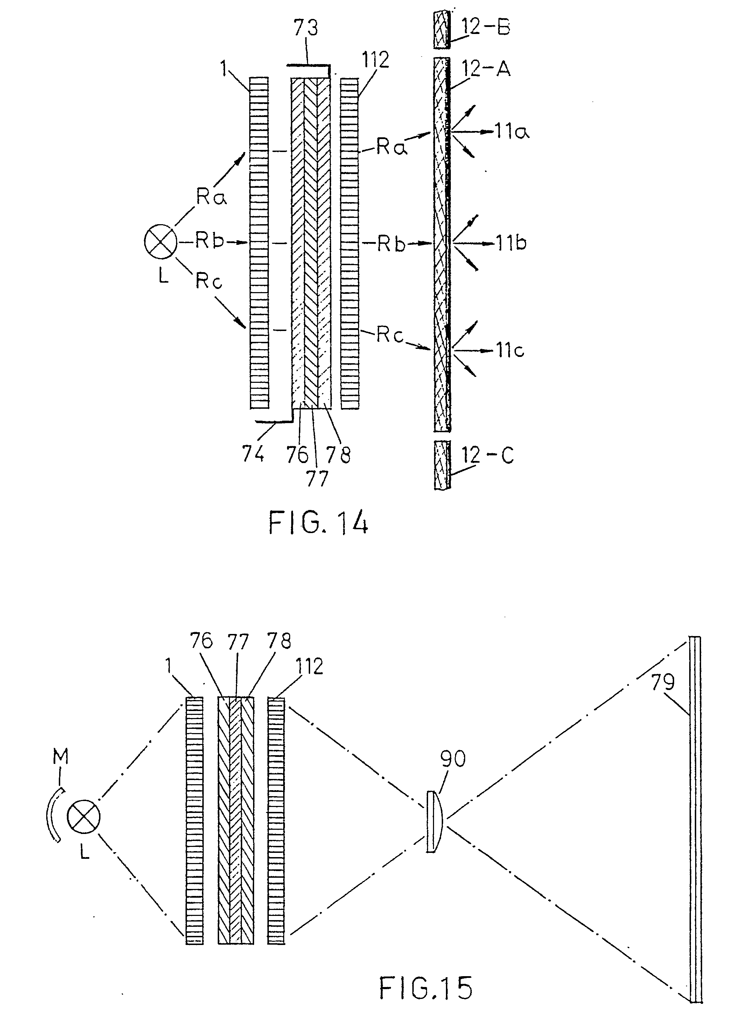

In Fig. 14, is shown a multilayer liquid crystal device 73, comprising a flat lens 112, which slightly enlarge the image from the LCDs to the scattering surface 12, so that the image on the surface 12 is slightly greater than the LCDs 73 together with the electrical connectors 73, 74. In this way is possible to assemble the plate 10 with the plates 10n and 10m and receive a very large image without any visible grid. The plates 10, 10n and 10m can be one large plate. Unlike as in Fig. 6, are here all composite layers of the same size.

It was found, that the multilayer liquid crystal device, according to the principles described in the present invention works successful as a transparency in any projection arrangement.

In Fig. 15 is shown a projection device, comprising a multilayer display as described above. Members 76, 77 and 78 are composite LCDs, L is a light source, M is a spherical mirror, 90 is a projection lens and 79 is a large screen of reflective or translucent type. The problem of parallax was her solved by means of a flat lens 112, which replaced the scattering surface 12 in the previous devices. The use of a scattering surface 12 as in the previous devices was here disadvantageous, because it absorbs light before this reaches the lens 90. It was successful replaced by a flat lens, because the projection angle of the lens 90 is rather small. Without the flat lens 112, a standard image having 640 x 480 pixels will demonstrate bifurcated lines at both sides of the image, however it is acceptable for low resolution images, as in advertisement.

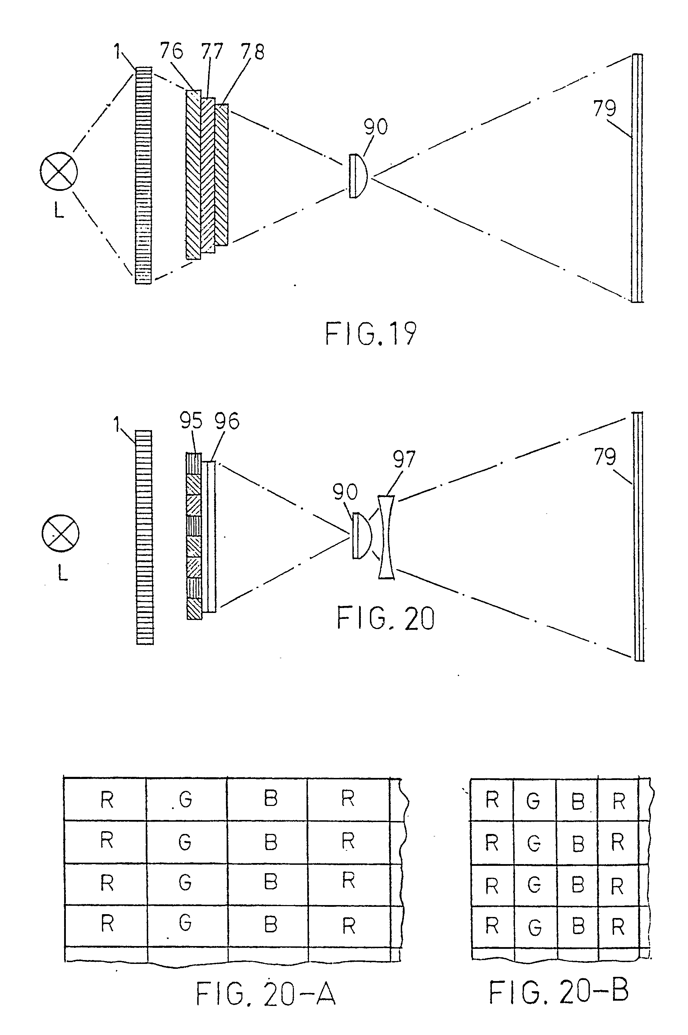

In Fig. 19 is shown another method to solve the problem of parallax in a projection arrangement by using here composite LCDs are of different sizes 76, 77 and 78. For good coincidence between the pixels of the composite LCDs, their sizes should be calculated in accordance with the projection angle of the lens 90.

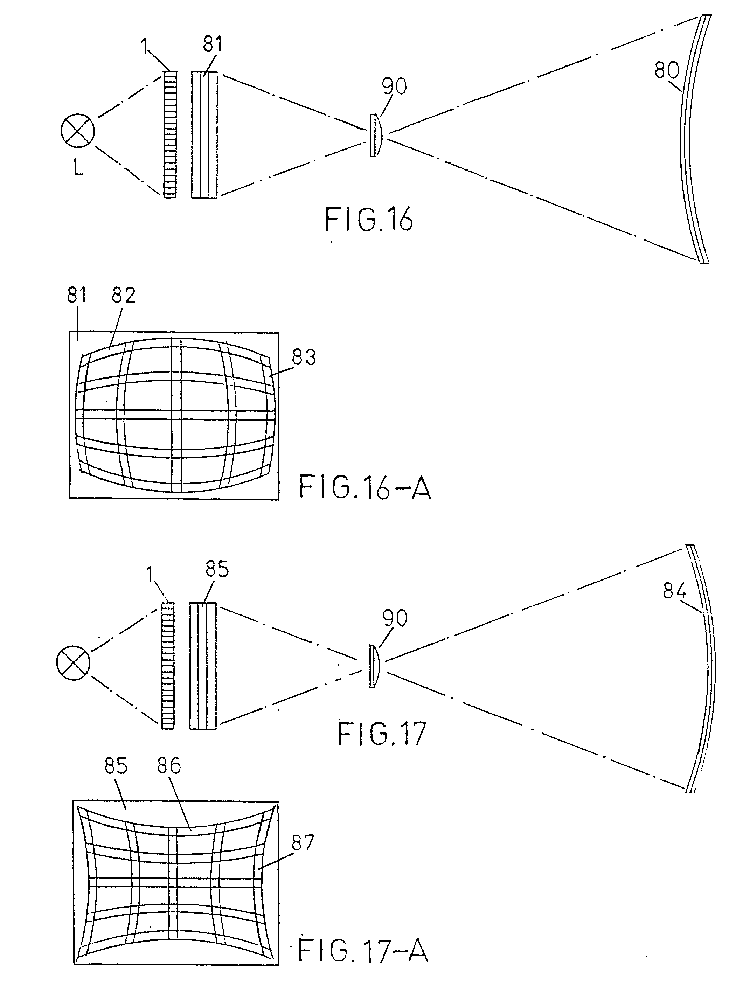

A projection device can also project images on a curved screen, as it is shown in Fig. 16 and Fig.

17 . When the screen have a prominent form 80, in Fig. 16, the columns 83 and the rows 82 of the LCD 81, should be curved creating somewhat like a barrel. When the screen 84, have a concave form, as shown in Fig. 17, the columns 87 and the rows 86 of the LCD 85, should be curved, somewhat like a pillow.

Image correction can also be obtained by means of special deformed lenses or special deformed mirrors. It can also be realized by a correction in the software.

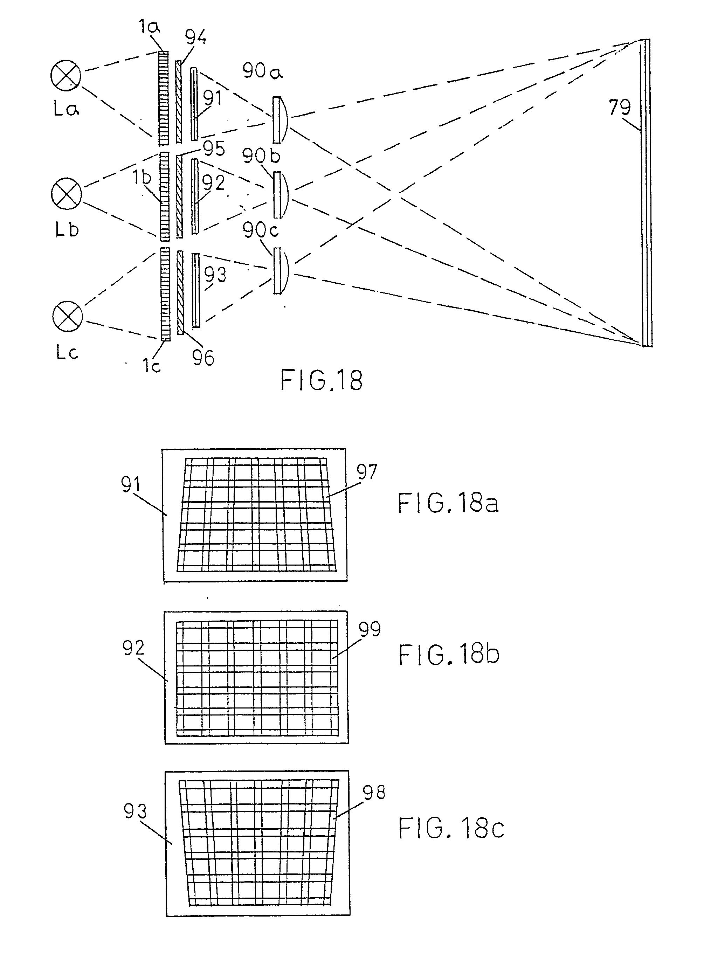

In the US Pat. 4,368,963, was disclosed a multilayer LCDs projection device, wherein the composite LCDs are arranged not in series as in the US pat. application 07/236,239, but in parallel, as it is shown in Fig. 18. To avoid parallax in this device can be used a well known method, wherein the beams of the three projectors are directed to an arrangement comprising dichroic mirrors and one common end projection lens. But this method is exensive and absorbs 2/3 of the incident light.

According to the present invention, the concept of geometrical correction of the matrix lattices of the composite LCDs can be used also in this arrangement.

In Fig. 18a and 18c is shown a trapeze correction of columns 97 of the upper LCD 91 and the columns 98 of the lower LCD 93. In Fig. 18b is shown that the middle LCD should not be corrected. By direct projection without a correction, the image on the screen shows bifurcated lines in the upper and lower part of the image.

In Fig. 18, members La, Lb, Lc, are the light sources, 1a, 1b, 1c, are the alignment lenses, 91, 92, 93, are the composite LCDs, 90a. 90b, 90c, are the projection lenses, 79, is a large common screen, 94, 95, 96, are transparent colored plates of the colors: red, green and blue.

The correction can also be obtained by means of special deformed mirrors, or software. A single or multi-play liquid crystal device using in a separate layer a RGB color filter as in Fig. 1, can also be used in a projection arrangement, as shown in Fig. 20. During the manufacturing, the pixels and the RGB elements of the color filter was expanded in horizontal direction as it is shown in Fig. 20-A. During the projection, the image was compressed back to its normal proportion by means of a special cinema-wide-screen lens 97, as it is shown in Fig. 20-B. Such technology allow to manufacture the RGB color filter by simple low cost color printing.

Here is given an additional explanation to the Fig. 4, Fig. 5 and Fig. 6. On page 9, last break is said for example, that in a double display, the rows in the first and second display can be energized simultaneously. It means, that during one frame, all rows of both displays will he energized and displayed. Without changing fhe construction of the multilayer display, the device can be energized in a noninterlaced or in a interlaced method. In a non-interlaced method, the rows of both LCDs are energized at the same time intervals.

In an interlaced method, the rows of the second display are energized intermediate between the time intervals for energizing the rows of the first display. For example, in Fig. 4, first will he energized the first row in the first display, after that, will be energized the first row in the second display, after that will be energized the second row in the first display, after that will be energized the second row in the second display and so on. In a double display the interlaced ratio will be 2:1, in a triple display the interlaced ratio will be 3:1, and so on.

Liquid crystal displays, particularly of the supertwisted sort, are rather slow. So the frame response is certainly crucial. The interlaced method allow to slow down the frame switching speed in each composite liquid crystal display to a half in a double display, to a third in a triple display and so on. The interlaced method, according to the present invention, is very important for passive-matrix displays as well for active-matrix liquid crystal displays. Applying a multicolor RGB filter or color filters in the form of color polarizers, as it was described earlier, a high resolution multicolor display can be obtained.

**Claims**

1.  A multilayer liquid crystal device including: liquid crystal displays (64, 67, 70) assembled in series; polarizers (68, 69) of the neutral type and/or polarizers (62, 63, 65, 66, 71, 72) with transfused colors;
    a light source (L) of thoroughgoing light rays (Ra, Rb, Rc, Rd) aligned parallel each other and perpendicular to the surfaces of said liquid crystal dis plays (64, 67, 70);
    a lens (1) or Fresnel lens of a size at least equal to said liquid crystal displays (64, 67, 70) disposed between said light source (L) and said liquid crystal displays (64, 67, 70);
    a light scattering translucent plate (10) disposed in the vicinity of said liquid crystal displays (64, 67, 70) at the opposite side to said source and parallel to said liquid crystal displays (64, 67, 70).

2.  A multilayer liquid crystal device as in claim 1, wherein said light source (L) radiates light rays (Ra, Rb, Rc) at a small diverging angle and said liquid crystal displays (76, 77, 78) are of different sizes.

3.  A multilayer liquid crystal device as in claim 1 or 2, wherein a multicolor filter (2) arranged in form of a plurality of RGB elements is applied to any surface of said liquid crystal displays.

4.  A multilayer liquid crystal device as in claim 1 or 2, including two liquid crystal displays (5, 6, 7; 14, 15, 16), comprising a neutral polarizer (9, 53) sandwiched in the middle between said two liquid crystal displays (5, 6, 7; 14, 15, 16) and two polarizers (3, 18) applied to the outer surfaces of said liquid crystal displays (5, 6, 7; 14, 15, 16) wherein said outer polarizers (3, 18) can be of the neutral type or with transfused colors said colored polarizers (51, 55).

5.  A multilayer liquid crystal device as in claim 4, wherein said colored polarizers (51, 55, 57) are of the colors: red, blue and green or yellow, creating a new eliminative color system.

6.  A multilayer liquid crystal device as in claim 5, wherein every pixel of said liquid crystal displays (52, 54) is divided in two or three parts, thus every said part can be energized separately and independent and can turn to any of said colors red, green or blue according to said eliminative color system, while the integrated color of the whole pixel can become one of the colors: red, green blue, magenta, cyan, yellow, black and white, creating a new eliminative/additive color mixture system providing a true RGB system.

7.  A multilayer liquid crystal device according to the claims 5 and 6, wherein said colored polarizers (55, 56, 57) are of the colors: magenta, cyan and yellow, creating a new subtractive/additive color mixture system of a different palette than in claim 6.

8.  A multilayer liquid crystal display as in claim 4, including three liquid crystal displays (64, 67, 70) having a neutral polarizer (68, 69) sandwiched in the middle between the first and second liquid crystal display (64, 67) or between the second and third liquid crystal display (67, 70) and three colored polarizers (62, 63, 64, 65, 71, 72), applied to the remaining internal surface and two outer surfaces.

9.  A multicolor liquid crystal device as in claim 8 , wherein said colored polarizers (62, 63, 64, 65, 71, 72) are of the colors red, green and blue creating a three-ply eliminative color device.

10. A multicolor liquid crystal device as in claim 9, wherein said colored polarizers (62, 63, 64, 65, 71, 72) are of the colors magenta, cyan and yellow, creating a three-play subtractive color mixture device.

11. A multilcolor liquid crystal device as in claim 8, wherein said polarizers (62, 63, 64, 65, 71, 72) are at least two polarizers.

12. A multilayer liquid crystal device as in claim 1, or 2, including two matrix liquid crystal displays (25, 32), wherein the row electrodes (24, 30) of said liquid crystal displays (25, 32) are disposed on the glass substrates (23, 29) with gaps, which width is equal to the width of the row electrodes (24, 30) and said row electrodes (30) in the second liquid crystal display (32) are shifted against the row electrodes (24) in the first liquid crystal display (25) at a distance equal to the width of a said row electrodes (24, 30).

13. A multilayer liquid crystal device as in claim 12, comprising at least three said liquid crystal displays (36, 38, 40) wherein said gaps are two times wider than in claim 12.

14. A multilayer liquid crystal device as in claim 12, wherein said gap is equal to the width of a group of row electrodes (35, 37, 39) and said group (35) in the first liquid crystal display (36) is shifted against a such group of electrodes (37) in the second liquid crystal display (38) at a width equal to the width of said group of row electrodes.

15. A multilayer liquid crystal device as in claim 14, wherein a row of semiconductors (T-1, T-2) is used to drive a group of row electrodes.

16. A multilayer liquid crystal device according to any of the above claims, used in matrix liquid crystal devices or in any liquid crystal image devices, or in projection devices, including a projection lens (90) and a large screen (79).

17. A multilayer liquid crystal device as in claim 16, wherein said scattering surface (12) is replaced by a flat lens (112), which is disposed between the said liquid crystal device and said projection lens (90).

18. A multilayer liquid crystal device as in claim 17, wherein the said scattering surface (12) is absent, while using said projection device for low resolution images.

19. A multilayer liquid crystal device as in claim 18, used for high resolution devices, wherein the composite said liquid crystal displays (76, 77, 78) are of different sizes.

20. A multilayer liquid crystal device according to claim 17, used for projection on a curved screen (80), wherein the electrode lattices (82, 83) of said liquid crystal displays (81) are corrected in form of a barrel.

21. A multilayer liquid crystal device as claimed in claim 20, used for projection on a curved screen (84), wherein said electrode lattices (86, 87) are corrected in form of a pillow.

22. A multilayer liquid crystal display, for use in parallel projection arrangement, wherein to avoid parallax said electrode lattices (97, 98, 99) are corrected in form of a trapeze.

23. A multilayer liquid crystal device as in claim 18, wherein said liquid crystal displays (76, 77, 78) are of different sizes, allowing to project high resolution images without parallax distortions.

24. A multilayer liquid crystal display as in claim 5, wherein said mutilayer liquid crystal device is applied in front of a black and white cathode-ray tube (58).

25. A multilayer liquid crystal device, as in claim 4 or 5 or 24, wherein said liquid crystal displays (52, 54) are energized with voltages of triangle form, or near to a triangle form.

26. A multilayer liquid crystal display, as in claim 17, comprising at least one liquid crystal layer (96) and a second layer in form of said RGB multicolor filter applied to any surface of said liquid crystal display, wherein said pixels of said liquid crystal display and said RGB elements of said multicolor filter are expanded in the horizontal direction, while during the projection, the image is corrected to its normal size, by means of a special correction cinema-wide-screen lens (97).

27. A multicolor liquid crystal device as in claims 12 and 13, wherein the row electrodes (24, 30) of the composite liquid crystal displays (25, 32) are energized simultaneously, in a interlaced or non-interlaced way.

FIG. 1

FIG. 2

FIG. 3-A

FIG. 3-B

FIG. 4

FIG. 5

FIG. 6

FIG. 7

FIG. 8

FIG. 9

FIG. 10

FIG. 11

FIG. 12

FIG. 14

FIG.15

FIG.16

FIG.16-A

FIG.17

FIG.17-A

14

FIG.18

FIG.18a

FIG.18b

FIG.18c

FIG.19

FIG. 20

FIG. 20-A

FIG. 20-B